# EUROPEAN PATENT SPECIFICATION

(11) **EP 2 722 094 B1**
(45) Date of publication and mention of the grant of the patent: **17.06.2020**
(21) Application number: 12188860.6
(22) Date of filing: 17.10.2012
(51) Int. Cl.: B01D 53/08, B01D 53/12, B01D 53/62, B01D 53/96

(54) **CAPTURING OF CO2 FROM A PROCESS GAS**
EINFANGEN VON CO2 AUS EINEM PROZESSGAS
CAPTURE DE CO2 D'UN GAZ DE PROCESSUS

(43) Date of publication of application: 23.04.2014
(73) Proprietor: General Electric Technology GmbH, 5400 Baden (CH)
(72) Inventor: Balfe, Michael, 65203 Wiesbaden (DE); Lefebvre, Jonathan, 60240 Liancourt Saint Pierre (FR); Weingartner, Christoph, 55435 Gau-Algesheim (DE)
(74) Representative: BRP Renaud & Partner mbB Rechtsanwälte Patentanwälte Steuerberater

(56) References cited:
- WO-A1-2005/046862
- WO-A1-2007/045048
- WO-A1-2009/148334
- US-A1- 2003 007 918
- US-A1- 2003 151 023
- MANOVIC V ET AL: "Steam hydration of sorbents from a dual fluidized bed CO2 looping cycle reactor", FUEL, IPC SCIENCE AND TECHNOLOGY PRESS, GUILDFORD, GB, vol. 87, no. 15-16, 1 November 2008 (2008-11-01), pages 3344-3352, XP023438331, ISSN: 0016-2361, DOI: 10.1016/J.FUEL.2008.04.035 [retrieved on 2008-06-02]

## Description

### Technical Field

The present invention relates to a system for capturing of CO₂ from a process gas.

The present invention further relates to a method for capturing of CO₂ from a process gas.

### Background art

There is a general aim to capture the CO₂ in gases generated in power generation systems fuelled with for example fossil fuels, gas, or wood to make the process more environmentally friendly and to reduce the effect of global warming. The captured CO₂ gas may then be compressed and transported to be stored in a suitable place, for example in deep geological formations or deep ocean masses. There are several technologies known to remove CO₂ from the flue gas generated such as by absorption, adsorption, membrane separation, and cryogenic separation.

Dry processes for separation of carbon dioxide from gas mixtures may utilize metal oxides as sorbent. The metal oxide may form metal carbonate at high temperatures with carbon dioxide present. The carbon dioxide may be released from the metal carbonate under the reformation of the metal oxide. Problems associated with the use of metal oxides as adsorbents for carbon dioxide includes sintering of the adsorbents resulting in reducing the efficiency of the sorbents, and if sulfur is present in the gas, sulfur carbonate may be formed which may reduce the efficiency of the sorbents.

One dry process for separation of carbon dioxide from gas mixtures by use of a metal oxide sorbent is disclosed in WO 2009/148334 A1. The disclosed process incorporates regeneration of the carbon dioxide capture capacity of the metal oxide.

It is difficult to obtain efficient regeneration of sorbents for carbon dioxide capturing according to prior art.

WO 2005/046 862 discloses a system and method in accordance with the pre-characterizing parts of claims 1 and 8.

### Summary of the invention

Purposes of the present invention include providing solutions to problems identified with regard to prior art.

The present system and method allow for efficient capturing of CO₂ from a process gas with efficient regeneration of sorbent material able to capture the CO₂ present in process gas.

According to a first aspect of the present invention there is provided a system for capturing CO₂ from a process gas, the system comprising a first reactor arranged to receive a stream of process gas and a particulate sorbent material comprising calcium oxide able to capture the CO₂ present in the process gas such that calcium carbonate is formed, the first reactor comprising means for discharging CO₂ depleted process gas, means for discharging a first portion of particulate sorbent material having captured CO₂, and means for discharging a second portion of particulate sorbent material having captured CO₂; a second reactor arranged to receive the first portion of particulate sorbent material from the first reactor, the second reactor comprising heating means arranged to cause release of CO₂ from the particulate sorbent material by decarbonation of the calcium carbonate to form calcium oxide, the second reactor further comprising means for returning the first portion of particulate sorbent material to the first reactor and means for discharging a CO₂ rich gas stream; and a third reactor arranged to receive the second portion of particulate sorbent material from the first reactor, the third reactor comprising means for supplying H₂O to the second portion of particulate sorbent material to hydrate at least a part of a remaining portion of calcium oxide of the second portion of particulate sorbent material to form calcium hydroxide, the third reactor further comprising means for returning the second portion of particulate sorbent material to the first reactor. The system further comprises at least one first separator arranged to remove fine particulate sorbent material from the CO₂ depleted flue gas discharged from the first reactor, a second separator arranged to remove fine particulate sorbent material from the CO₂ rich gas discharged from the second reactor, and an agglomerator configured for receiving fine particulate sorbent material from one of the at least one first separator and the second separator and mixing them with a liquid, producing wet agglomerates of the fine sorbent particles, and for forwarding the wet agglomerates to the first reactor and/or to the third reactor (5).

To hydrate at least a part of a remaining portion of calcium oxide of the second portion of particulate sorbent material to form calcium hydroxide results in efficient regeneration of sorbent material. Hydration result in swelling of the sorbent material, thus hydration may act in removing from the sorbent material compounds, such as for example CaSO₄, which otherwise may block access to CaO of the sorbent material. The third reactor arranged to receive the second portion of particulate sorbent material from the first reactor results in efficient regeneration of sorbent material.

According to one embodiment, the first reactor may be a carbonator reactor, or a reactor where carbonization reactions may occur, the second reactor may be a calciner reactor, or a reactor where calcination reactions may occur, and the third reactor may be a hydrator reactor, or a reactor where hydration reactions may occur.

According to one embodiment, the first reactor may be a circulating fluidized carbonator reactor, the second reactor may be a circulating fluidized calciner reactor, and the third reactor may be a hydrator reactor.

According to one embodiment, the process gas may be flue gas. The flue gas may, for example, be from the combustion of coal, oil, natural gas, industrial and domestic waste and peat, for example in power plants.

According to one embodiment, the third reactor may be arranged to operate at a lower temperature than the first reactor, and the second reactor may be arranged to operate at a higher temperature than the first reactor.

According to one embodiment, the system may further comprise means for cooling the second portion of the particulate sorbent material prior to entering the third reactor.

According to one embodiment, the system may further comprise means for heating the second portion of the particulate sorbent material prior to returning to the first reactor.

According to one embodiment, the system may further comprise means for cooling the first portion of particulate sorbent material to be returned from the second reactor to the first reactor.

According to one embodiment, the system may further comprise means for heating the first portion of particulate sorbent material to be received by the second reactor from the first reactor.

According to one embodiment, the system may further comprise:
means for cooling the second portion of the particulate sorbent material prior to entering the third reactor; and/or means for heating the second portion of the particulate sorbent material prior to returning to the first reactor, and/or
means for cooling the first portion of particulate sorbent material to be returned from the second reactor to the first reactor, and/or means for heating the first portion of particulate sorbent material to be received by the second reactor from the first reactor.

According to one embodiment, the means for cooling the first portion of particulate sorbent material to be returned from the second reactor to the first reactor, and the means for heating the first portion of particulate sorbent material to be received by the second reactor from the first reactor, may be means for exchanging heat from the first portion of particulate sorbent material to be returned from the second reactor to the first reactor, to the first portion of particulate sorbent material to be received by the second reactor from the first reactor.

According to one embodiment, the third reactor may be arranged with means for feeding of H₂O into the third reactor. According to one embodiment, the means for feeding of H₂O into the third reactor, may be means for feeding of gaseous H₂O into the third reactor.

According to one embodiment, the system may further comprise a fourth reactor arranged to receive finer particulate sorbent material, the fourth reactor being arranged for agglomerating the finer particulate sorbent material into larger particulate sorbent material, and/or hydrating the sorbent material.

According to one embodiment, the fourth reactor may be arranged with means for feeding liquid comprising H₂O into the third reactor. According to one embodiment, the liquid comprising H₂O may further comprise additives, preferably viscosity modifying additives. According to one embodiment the fourth reactor may be a hydrator reactor arranged for agglomeration of particulate sorbent material.

The fourth reactor is an agglomerator or a pelletizer. The means for discharging CO₂ depleted process gas from the first reactor comprises at least one particulate separator arranged to separate at least a portion of the second portion of particulate sorbent material from the CO₂ depleted process gas, and wherein the means for discharging CO₂ rich gas from the second reactor comprises at least one particulate separator arranged to separate particulate sorbent material from the CO₂ rich gas, wherein the system further comprises a fourth reactor arranged to receive at least a portion of the separated particulate sorbent material from the CO₂ depleted process gas and from the CO₂ rich gas, and agglomerate the separated particulate sorbent material into particulate sorbent material agglomerates, and means for transferring the agglomerates to the third reactor, and/or means for transferring the agglomerates to the first reactor.

According to one embodiment, the at least one particulate separator arranged to separate at least a portion of the second portion of particulate sorbent material from the CO₂ depleted process gas, may further be arranged to transfer heat to sorbent material entering the first reactor, and/or the at least one particulate separator arranged to separate particulate sorbent material from the CO₂ rich gas may further be arranged to transfer heat to sorbent material entering the second reactor.

According to one embodiment, the means for returning the second portion of particulate sorbent material to the first reactor may be arranged for dehydrating the hydrated calcium oxide, and/or wherein the first reactor may be arranged for dehydrating the hydrated calcium oxide.

According to a second aspect there is provided a method for capturing CO₂ from a process gas in a system comprising a first reactor, a second reactor and a third reactor, the method comprising the steps of: transporting process gas comprising CO₂ to the first reactor; contacting the process gas comprising CO₂ with a sorbent material comprising calcium oxide and carbonating a portion of the content of calcium oxide, such that sorbent material comprising calcium carbonate and calcium oxide is formed, in the first reactor; transporting a first portion of the sorbent material comprising calcium carbonate from the first reactor to the second reactor; releasing CO₂ from the first portion of the sorbent material comprising calcium carbonate and calcium oxide by decarbonation of at least a portion of the content of the calcium carbonate in the second reactor; returning, subsequent to the decarbonation, at least a portion of the first portion of the sorbent material from the second reactor to the first reactor; transporting a second portion of the sorbent material comprising calcium carbonate and calcium oxide from the first reactor to the third reactor; adding H₂O to the third reactor and hydrating at least a part of the second portion of the sorbent material comprising calcium carbonate and calcium oxide, to form calcium hydroxide from the calcium oxide; and returning, subsequent to the hydrating, the second portion of the sorbent material from the third reactor to the first reactor. The method further comprises the steps of: removing fine particulate sorbent material from the CO₂ depleted flue gas discharged from the first reactor in at least one first separator, removing fine particulate sorbent material from the CO₂ rich gas discharged from the second reactor in a second separator, receiving fine particulate sorbent material from one of the at least one first separator and the second separator and mixing them with a liquid, producing wet agglomerates of the fine sorbent particles, in an agglomerator, and forwarding the wet agglomerates from the agglomerator to the first reactor and/or to the second reactor.

According to one embodiment of the second aspect, the method may further comprise the step of: dehydrating at least a part of the calcium hydroxide from the third reactor.

According to one embodiment of the second aspect, the dehydrating at least a part of the calcium hydroxide from the third reactor may occur by contacting the calcium hydroxide with CO₂ depleted flue gas discharged from the first reactor.

According to one embodiment of the second aspect, the method may further comprise the steps of: cooling the second portion of the sorbent material comprising calcium carbonate and calcium oxide prior to entering the third reactor; heating the second portion of the sorbent material comprising calcium carbonate and calcium hydroxide, prior to re-entering the first reactor, and, optionally; exchanging heat from the first portion of the sorbent material comprising calcium carbonate and calcium oxide transported towards the first reactor, to the first portion of the sorbent material comprising calcium carbonate and calcium oxide transported to the second reactor.

The method further comprises the steps of: discharging CO₂ depleted process gas from the first reactor; separating particles from the discharged CO₂ depleted process gas from the first reactor; discharging CO₂ rich gas from the second reactor; separating particles from the discharged CO₂ rich gas from the second reactor; agglomerating at least a portion of the separated particles from the first reactor and the second reactor; and transferring at least a portion of agglomerates formed to the third reactor and/or to the first reactor.

According to one embodiment of the second aspect, the process gas may be flue gas.

The system further comprises a fourth reactor, wherein the step of agglomerating takes place in the fourth reactor.

According to one embodiment of the second aspect, a step of hydration takes place in the fourth reactor in addition to the step of agglomerating.

According to one embodiment of the second aspect the step of agglomerating and/or hydration taking place in the fourth reactor may take place at a temperature of 100°C or less.

According to one embodiment of the second aspect, the step of contacting the process gas comprising CO₂ with a sorbent material in the first reactor may take place at a temperature of 700°C or less, the step of releasing CO₂ from the first portion of the sorbent material in the second reactor may take place at a temperature of at least 890°C, the step of hydrating at least a part of the second portion of the sorbent material in the third reactor may take place at a temperature of 510°C or less.

According to a third aspect, there is provided a use of the system according to the first aspect, for regeneration of the particulate sorbent material.

Embodiments and discussions with regard to the first aspect may also be relevant with regard to the second and third aspects. References to these embodiments are hereby made, where relevant.

The above described aspects and other features are exemplified by the following figures and detailed description.

### Brief description of drawings

The invention is described in more detail below with reference to the appended drawings in which:
Fig. 1 is a schematic flow scheme of the system according to one embodiment not according to the invention.
Fig. 2 is a schematic flow scheme of the system according to one embodiment of the invention.
Fig. 3 is a schematic flow scheme of the system according to one embodiment of the invention.
Fig. 4 is a schematic flow scheme of the system according to one embodiment of the invention.

It is understood that the detailed description below is intended to improve the understanding of the invention, and should not be interpreted as limiting the scope of the invention.

### Description of preferred embodiments

### Reactions taking place in embodiments:

The calcium oxide of the sorbent material may react with CO₂ under formation of calcium carbonate. When calcium oxide, CaO, and CO₂ is brought in contact, calcium carbonate, CaCO₃ may be formed according to carbonation reaction 1 (R1) under release of energy as heat. In the system of embodiments of the invention, R1 may take place, for example, in the first reactor, such as in the carbonator reactor.

R1: CaO(s) + CO₂(g)⇄CaCO₃(s) with H_{r, 298 K}= - 170 kJ/mol.

In the first reactor, R1 results in lowering of the CO₂ concentration in the process gas, such as flue gas, thus resulting in a gas effluent from the first reactor having a considerable lower concentration of CO₂ than the inlet concentration. In the case with flue gas, the concentration of CO₂ before capturing or reaction according to reaction (1), may be for example 15%. Reaction 1 may take place, for example, at or below 650°C, and at pressures of approximately 1 atmosphere, which may exist in the first reactor.

In addition to reacting with CO₂,CaO may react with sulfur dioxide, or SO₂, under formation of calcium sulfate and energy in the form of heat, according to reaction 2 (R2), for example if SO₂ is present in the process gas.

R2: CaO(s) + SO₂(g) + 1/2 O₂(g)⇄CaSO₄(s) with H_{r, 298 K}= - 520 kJ/mol.

R2 may, for example, take place in the calciner reactor. Particularly if in-situ oxyfired coal combustion takes place in the second reactor R2 may take place in the calciner reactor.

In addition SO₂ may react with CaCO₃ under formation of calcium sulfate and energy in the form of heat, according to reaction 3 (R3).

R3: CaCO₃(s) + SO₂(g) + 1/2 O2(g)⇄CaSO₄(s) + CO₂(g) with H_{r, 298 K}= - 324 kJ/mol.

R3 may, for example, take place in the calciner reactor where partial pressures of CO₂ are expected.

CaO may react with water in a hydration reaction taking place in the third reactor, such as a hydrator reactor, according to reaction 4 (R4).

R4: CaO(s) + H₂O(g)⇄Ca(OH)₂(s) with H_{r, 298K}= - 109 kJ/mol.

The reversed R4 describes dehydration of Ca(OH)₂, an endothermic reaction. Dehydration may efficiently be performed, for example, at conditions of atmospheric pressure, at a partial pressure of water at 0.1 atm, and at temperatures above approximately 400°C, such as above 410°C. Thus, dehydration may take place in the first reactor, such as the carbonator reactor, and/or in pipings and/or solids separation devices, such as for example cyclones, of the system comprising hot flue gas downstream the first reactor.

Reactions with sulphur dioxide, for example as described by R2 and R3, have a negative effect on the capacity of the sorbent material for capturing CO₂. Reactions according to R2 and R3, may occur if sulphur dioxide is present in the process gas, for example in the case of the process gas being flue gas for example resulting from burning of fuels such as coal, or other sulphur containing fuels. CaSO₄ may result in blockage of pores in the sorbent material, thus reducing the efficiency of CO₂ capturing by the sorbent material, for example due to blocking of the CaO present in the core of the sorbent particles. Further, a layer of CaCO₃ formed on the sorbent material particles reduces the efficiency of the sorbent material in capturing CO₂. Sintering of sorbent material which may occur also reduces the efficiency of the sorbent material in capturing CO₂. Since H₂O is a small molecule it is capable of penetrating product layers of CaSO₄ and/or CaCO₃ forming Ca(OH)₂ in less accessible regions of the particle. The molar volume of Ca(OH)₂ is larger than the molar volume for CaO. Thus, particles comprising CaO may swell when hydrated according to R4, resulting in crack formations in any present layer of CaSO₄ and/or CaCO₃, thus hydration according to R4 may improve the efficiency of the sorbent material and regenerate the sorbent material. Thus, the system according to embodiments are efficient for capturing of CO₂ from process gas such as flue gas, which may contain sulphur.

The third reactor, such as for example a hydrator reactor, arranged to hydrate solid material received from the first reactor and recycle hydrated solid material to the first reactor is an efficient way of increasing surface area of the sorbent material.

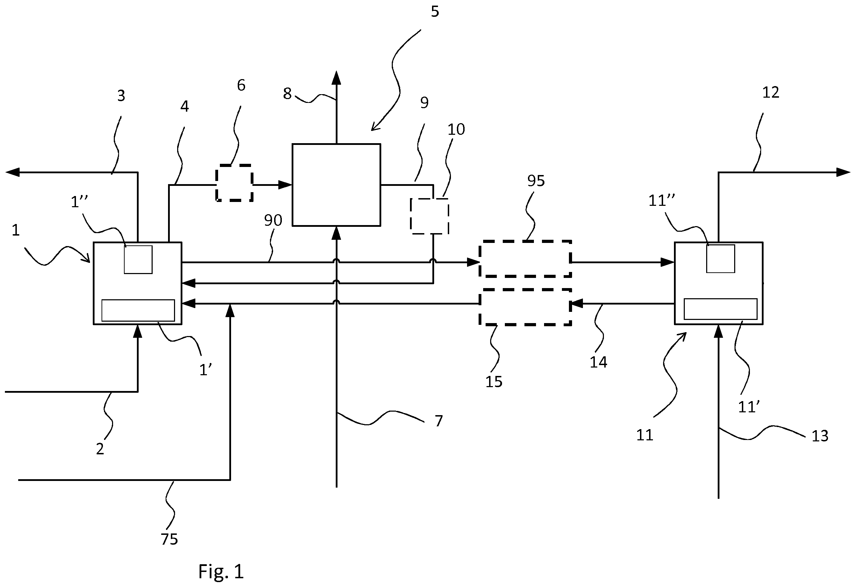

With reference to figure 1, a system for capturing CO₂ from flue gas which may or may not comprise sulfur, is described. The system comprises a carbonator arrangement 1, receiving flue gas via piping 2. The carbonator arrangement 1 comprises a circulating fluidized bed carbonator reactor 1' optionally with internal heat transfer area in addition to solids separation device 1" removing solids from the gas stream before the gas stream leaves the system through piping 3. The circulating fluidized bed carbonator reactor 1' contains particulate sorbent material, in this particular example the sorbent material essentially consists of CaO. The sorbent reacts with CO₂ and CO₂ depleted flue gas leaves the carbonator reaction system 1 via piping 3, having undergone bulk solids removal.

Reacted sorbent is regenerated by decarbonation in the calciner arrangement 11 forwarded from the carbonator arrangement 1 by piping 90, which regeneration process can be described by endothermic reversed R1. The calciner arrangement 11 comprises a circulating fluidized bed calciner reactor 11' with solids separation device 11" removing solids in the gas stream before the gas stream leaves the system via piping 12. Thus, in the calciner arrangement 11, CaCO₃ is converted to CaO and CO₂, and CO₂ exits the calciner arrangement 11 by means of piping 12, having undergone bulk solids removal. Means for energy input into the calciner arrangement 11 is indicated by piping 13, which forwards for example a carbon source, such as coal, and an oxygen stream, such as oxygen diluted with CO₂. Sorbent, predominantly in the form of CaO particles exits the calciner arrangement 11 by means of piping 14 and is recycled to the carbonator arrangement 1. Optionally, a heat exchanger 15 is used to reduce the temperature of sorbent being recycled back to the first reactor. Optionally, a heat exchanger 95 is used to heat sorbent before entering the calciner arrangement 11. As an additional option these two heat exchangers may be combined so that heat is transferred from heat exchanger 15 to heat exchanger 95. Sorbent make-up flow, for example in the form of limestone, may be added through piping 75 to the stream of sorbent being recycled back to the carbonator arrangement 1 from the calciner arrangement 11.

The sorbent may be detoriated by sulfatization if sulfur is present in the flue gas, for example if the flue gas is resulting from burning of coal, as described by R2 and R3, and/or by sintering, for example during calcination. Sorbent particles, comprising CaCO₃, CaO, and possible CaSO₄, leave the carbonator arrangement 1 via piping 4 and enter hydrator reactor 5. The hydrator reactor 5 is equipped with heat transfer surface so that heat released during the hydration reaction can be removed from the hydrator reactor 5. Optionally, the sorbent particles may in addition or alternatively be cooled before entering the hydrator reactor 5, such as by means of optional heat exchanger 6. Reactivation medium comprising gaseous H₂O is fed to the hydrator reactor 5 via piping 7. Inside the hydrator reactor the sorbent is reacting according to R4 such that CaO is transferred to Ca(OH)₂. Under this reaction sorbent particles are regenerated. Possible excess gas, such as steam may leave the hydrator reactor by means of piping 8 or may be returned to carbonator arrangement 1. Regenerated sorbent particles are transferred back to the carbonator arrangement 1 via piping 9. Optionally, hydrated sorbent particles will be heated and dehydrated before entering the carbonator arrangement 1, such as by means of optional heat exchanger 10.

It will be understood that in addition to any heat exchangers discussed, heat may be removed from for example the carbonator arrangement 1 and the hydrator reactor 5 by suitable means.

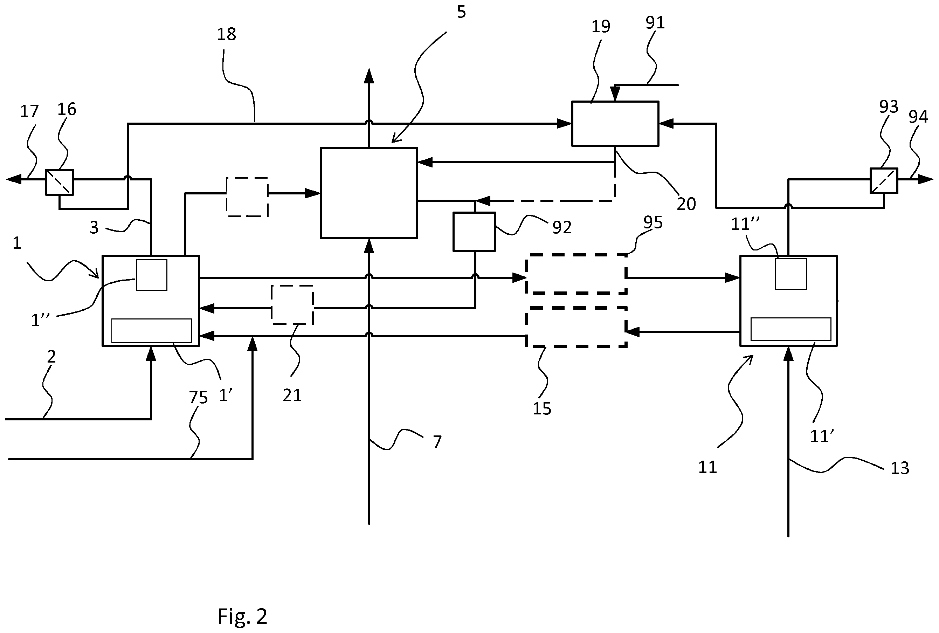

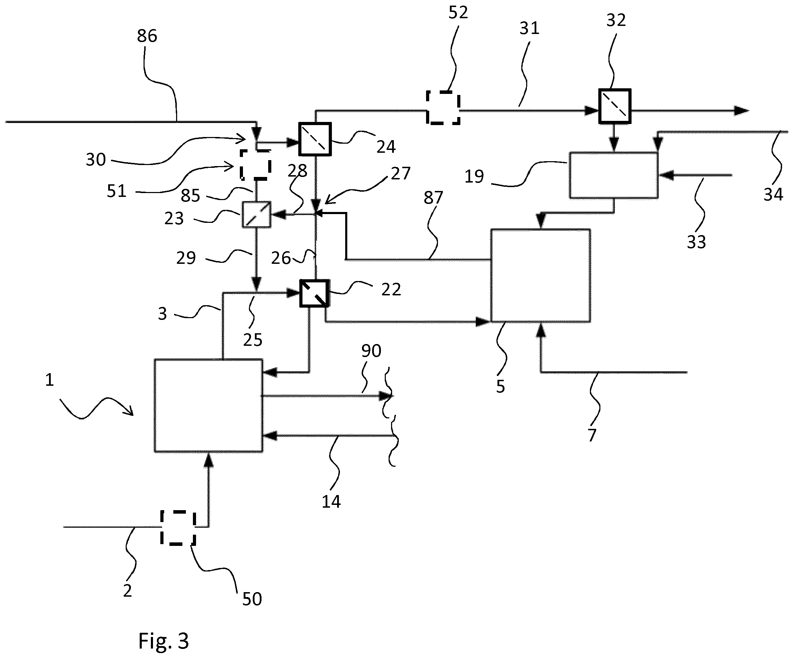

With reference to figure 2, a system is illustrated which in addition to what is described with reference to the system of figure 1, discloses means for pelletizing fine sorbent particles into a size suitable for the system. Particulate sorbent hydration may act, in conjunction with a number of particle size reduction mechanisms, to reduce the average particle size of the circulating particulate sorbent material by producing fine material what is hereafter referred to as fines. Re-processing of fine material or fines into larger particles decouples sorbent fines losses from process make-up requirements increasing sorbent utilization and reducing operational costs. The fines are agglomerated to particles of a suitable size by means of the pelletizer 19. CO₂ depleted flue gas leaves the carbonator arrangement 1 through piping 3 containing a residue of particulate sorbent material, having undergone solids separation, and enters a sorting device 16 such as for example an electrostatic precipitator or bag filter, which removes most of the residual solids particulate material, such as fine sorbent particles, or fines, from the CO₂ depleted flue gas. Flue gas leaves the sorting device 16 by means of piping 17, while the particles leaves the sorting device 16 through piping 18, and enters the pelletizer 19. In addition, fines are fed to the pelletizer 19 from the calciner arrangement 11 and separator 93, particularly for example in the case where ash free or indirect heating method is used to bring heat into the calciner arrangement 11. In the pelletizer 19 the fines are mixed with a liquid such as water or a mixture of water and binding agent fed from piping 91, resulting in wet agglomerates of the fine sorbent particles. Thus, agglomeration takes place inside the pelletizer 19. The agglomerates leave the pelletizer 19 by means of piping 20. The agglomerates may either be forwarded to the hydrator reactor 5, or to the carbonator arrangement 1. Since the hydration reaction in hydrator reactor 5 takes place at a higher temperature and requires water, the agglomerates may be forwarded and introduced into the hydrator reactor 5 where any water from the agglomerates will provide water for the hydration reaction. Thus, fine sorbent particles may be converted to larger sorbent particles. In addition to agglomeration taking place inside the pelletizer 19, or agglomerator, hydration may take place in the pelletizer 19. Thus, pelletizer 19 may function as a hydrator. It is realized that the pelletizer may be positioned elsewhere in a system than what is described in figure 3, and that pelletizer 19 in addition to receiving fines from separators 16 and 93, may receive fines from other suitable sources. The embodiment with reference to figure 2 may also comprise a calciner arrangement 11 as previously described from which calciner arrangement 11 CO₂ rich gas is discharged via residual dust separator 93 and piping 94.

With reference to figure 3, a carbonator reactor and pelletization system according to one embodiment is illustrated. The system illustrated in figure 3 comprises a plurality of gas-solids separators 22, 23, 24 which act in separating solids from gas and further act in heating solids while cooling gas, thus resulting in particles with a temperature suitable for the system while cooling the flue gas that is leaving the system, thus minimising energy input or heat transfer surface requirements. The separators 22, 23, 24 may, for example, be of cyclon type, or any other solids separator suitable for the purpose. Flue gas enters the carbonator reactor 1 through piping 2 where it optionally may be heated via heat exchanger 50. The carbonator reactor may be comprised of one or more sections in which the particulate sorbent material is contacted with CO₂ rich flue gas and may contain heat transfer surface to remove the heat released through reaction. A mixture of CO₂ depleted flue gas and sorbent particles leaves the carbonator reactor 1 at a temperature T1 through piping 3 and is forwarded to a point 25 where the gas and the sorbent particles are combined with a flow of sorbent particles from separator 23 at a lower temperature T2 and the combined flow is forwarded to separator 22. By means of separator 22, sorbent particles are separated from the gas and fines, which gas and fines are leaving the separator 22 via piping 26. Larger sorbent particles, having a temperature T3 between T1 and T2, are leaving the separator 22 and at least a part of the larger particles are forwarded to the hydrator reactor 5 in which hydration takes place as described above while at least a part of the sorbent particles are recycled back to the carbonator reactor 1. The gas and fines from separator 22, having a temperature T3 being between T1 and T2 are forwarded to a point 27 where they are combined with a flow of sorbent particles from separator 24 and with hydrated sorbent particles from the hydrator reactor 5, having temperatures T4 and T5 respectively both preferably lower than T3 before the combined flow is forwarded to separator 23 via pipe 28. It is realised that the flows may not be combined in the same point 27, but that one of the flows may enter downstream of the other flow, or vice versa. From the separator 23, sorbent particles are forwarded through piping 29 to point 25, as previously described at temperature T2, between T3 and T4 or T5, while gas and fines, at temperature T2, are forwarded through piping 85 to a connection point 30 where the fines and the gas is combined with a make-up flow comprising sorbent material from piping 86. A heat exchanger 51 may be positioned downstream separation device 23 to cool the flue gas stream before it is mixed with the cool sorbent make-up stream, the heat removed from heat exchanger 51 may optionally be coupled to the heating of flue gas in heat exchanger 50 so that heat flows from heat exchanger 51 to heat exchanger 50.The flow is forwarded to separator 24, from which sorbent particles, at temperature T4 lower than T2, are forwarded to point 27, as previously described while fines and gas are forwarded through piping 31, and leaving the system, for example towards a chimney (not illustrated). Before leaving the system, the gas and fines are optionally cooled in heat exchanger 52 before entering separator 32, separating the gas from fines, and forwarding fines to pelletizer 19. The pelletizer is fed liquid for agglomeration of the fines, such as water or water and binding agent through piping 33. In addition, the pelletizer 19 may be fed with fines from the calciner reactor 11, (not illustrated) through piping 34 if the the operational mode restricts ash content from being too high. Agglomerated fines from the pelletizer are forwarded to hydrator reactor 5, wherein the agglomerated fines are transformed into dry sorbent particles under release of free water. The hydrator reactor 5 is fed liquid comprising water through piping 7. Piping 90 feed sorbent material from the carbonator reactor 1 towards the calciner system 11 (not illustrated) and piping 14 from the calciner reaction system 11 to carbonator reactor 1.

The system described above with reference to figure 3, thus describes efficient transformation of heat from flue gas to sorbent particles, such that flue gas is cooled and sorbent particles are heated to a suitable temperature before the partciles enters the carbonator reactor 1. The embodiment is suitable for systems utilizing primarily steam hydration at higher temperatures, such as a hydration temperature about 510°C or less. For example, such a system and for hydrating around 20% of the sorbent stream, the following temperatures may, for example, apply: T1 being around 650°C, T2 being between 350 and 550°C, T3 being between 540 and 610°C, T4 being between 200 and 300°C and T5 being between 300 and 510°C.

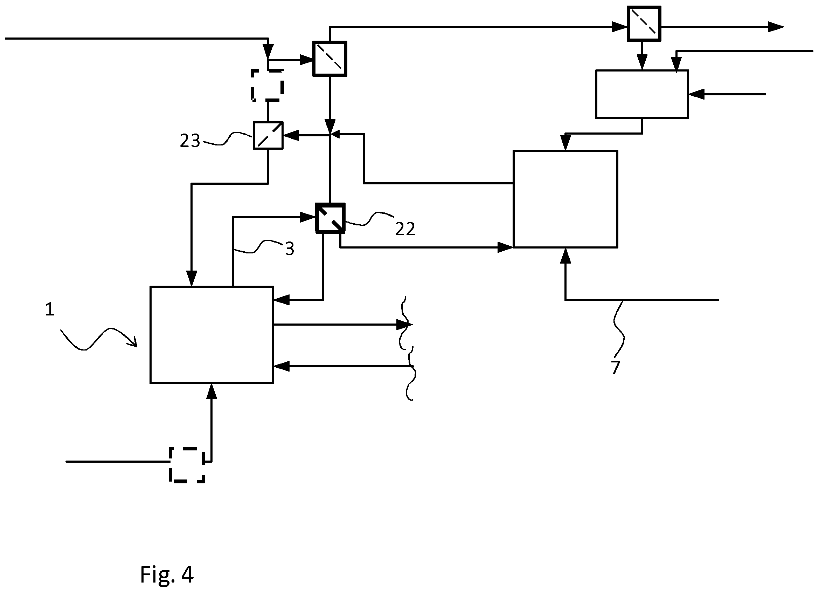

With reference to figure 4, an embodiment of the invention is illustrated. The embodiment only differs from the embodiment discussed with reference to figure 3 in that the stream of sorbent material from separator 23 is forwarded by means of piping directly into carbonator reactor 1 as an additional solids feed with the purpose of direct cooling and to improve the solids distribution and equilibrium driving forces in the upper section of the carbonation reactor. Thus, according to the embodiment illustrated by figure 4, the flow of sorbent material from separator 23 is not combined with a flow of gas and sorbent material from carbonator reactor 1 before entering the carbonator reactor 1. It is realised that the temperature of the sorbent material which is forwarded to the hydrator reactor 5 from separator 22 has a temperature essentially identical to the temperature of the sorbent material leaving the carbonator reactor 1 through pipings 3, for example around 650°C.

With regard to the embodiments, conditions for reactions R1 and R4, including for example temperatures and pressures, may be selected and/or maintained to favour desired reactants and/or products. Further the conditions may be selected to be suitable for the treated gas, the reactors and the system. Equilibrium pressures for gaseous reactants at different temperatures may be considered for selecting suitable conditions. For example, and with reference to R1, the fraction of CO₂ in flue gas may, for example, vary between 10 and 15 percent by volume for flue gas from power production and be as high as 30 percent by volume of CO₂ for flue gas from a conventional cement plant. For operating pressures of around 1 atm in the carbonator reactor, the temperature may be selected to be suitable for removal of 90% of the CO₂. For the case of power production, 650°C is acceptable in order to reduce the concentration of CO₂ in the treated flue gas to 1 percent by volume. For example for the case of cement plants flue gas, increased temperatures would still allow a similar removal efficiency. Since diffusions processes proceed at an increased rate with increasing temperature, a staged temperature profile in the carbonation reactor may also be an advantage. According to one embodiment, the temperature of an upper section of the carbonator reactor may be below 650°C and a lower section of the carbonator reactor above 650°C. It is realised that in analogy with the discussions above regarding suitable temperatures and pressures of the carbonator reactor, suitable conditions, such as for example temperatures and pressures, for other parts of the system, such as for example the calciner reactor and/or the hydrator reactor, or other parts, may be selected.

For example, CO₂ depleted flue gas having 10 percent by volume of water could be used to dehydrate sorbent around or slightly above 410°C. According to one embodiment the dehydration takes place above 410°C.

The position of the hydrator reactor 5 downstream of the carbonator reactor 1 according to the embodiments, such that sorbent material is forwarded to the hydrator reactor from the carbonator reactor without passing through the calciner reactor, results in efficient operating conditions for the hydrator reactor reducing the amount of cooling required for the material entering the hydrator reactor. For example, the temperature of the hydrator reactor may be maintained at or below 510°C, and the partial pressure of water may be selected at or below 1 atm.

Herein before it has been described that the carbonator reactor and the calcinator reactor are fluidized bed type of reactors, it is also appreciated that other types of carbonator reactors and calcinator reactors can be used.

To summarize, the present disclosure relates to a system for capturing CO₂ from a process gas. The system comprises a first reactor arranged to receive a stream of process gas and a particulate sorbent material comprising calcium oxide able to capture the CO₂ present in the process gas such that calcium carbonate is formed, the first reactor comprising means for discharging CO₂ depleted process gas, a first portion of particulate sorbent material having captured CO₂, and a second portion of particulate sorbent material having captured CO₂, a second reactor arranged to receive the first portion of particulate sorbent material from the first reactor, the second reactor comprising heating means arranged to cause release of CO₂ from the particulate sorbent material by decarbonation of the calcium carbonate to form calcium oxide, the second reactor further comprising means for returning the first portion of particulate sorbent material to the first reactor and means for discharging a CO₂ rich gas stream, and a third reactor arranged to receive the second portion of particulate sorbent material from the first reactor, the third reactor comprising means for supplying water to the second portion of particulate sorbent material to hydrate the calcium oxide to form calcium hydroxide, the third reactor further comprising means for returning the second portion of particulate sorbent material to the first reactor.

While the invention has been described and illustrated with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment described and illustrated herein as being the best mode contemplated for carrying out this invention, but that the invention will include all embodiments falling within the scope of the appended claims. Moreover, the use of the terms first, second, etc. are not intended to denote any order or importance, but rather the terms first, second, etc. are employed herein simply as a means of distinguishing one element from another.

## Claims

1. A system for capturing CO₂ from a process gas, the system comprising
a first reactor (1') arranged to receive a stream of process gas and a particulate sorbent material comprising calcium oxide able to capture the CO₂ present in the process gas such that calcium carbonate is formed, the first reactor (1') comprising means (3) for discharging CO₂ depleted process gas, means (90) for discharging a first portion of particulate sorbent material having captured CO₂, and means (4) for discharging a second portion of particulate sorbent material having captured CO₂,
a second reactor (11') arranged to receive the first portion of particulate sorbent material from the first reactor (1'), the second reactor (11') comprising heating means arranged to cause release of CO₂ from the particulate sorbent material by decarbonation of the calcium carbonate to form calcium oxide, the second reactor (11') further comprising means (14) for returning the first portion of particulate sorbent material to the first reactor (1') and means (12) for discharging a CO₂ rich gas stream, and
a third reactor (5) arranged to receive the second portion of particulate sorbent material from the first reactor (1'), the third reactor (5) comprising means (7) for supplying water to the second portion of particulate sorbent material to hydrate at least a part of a remaining portion of calcium oxide of the second portion of particulate sorbent material to form calcium hydroxide, the third reactor (5) further comprising means (9) for returning the second portion of particulate sorbent material to the first reactor (1'),
**characterized by**
at least one first separator (16; 22-24, 32) arranged to remove fine particulate sorbent material from the CO₂ depleted flue gas discharged from the first reactor (1'),
a second separator (93) arranged to remove fine particulate sorbent material from the CO₂ rich gas discharged from the second reactor (11'), and
an agglomerator (19) configured for receiving fine particulate sorbent material from one (16, 32) of the at least one first separator (16; 22-24, 32) and the second separator (93) and mixing them with a liquid, producing wet agglomerates of the fine sorbent particles, and for forwarding the wet agglomerates to the first reactor (1') and/or to the third reactor (5).

2. The system according to claim 1, wherein the first reactor (1') is a carbonator reactor, the second reactor (11') is a calciner reactor, and the third reactor (5) is a hydrator reactor.

3. The system according to claim 1 or 2, wherein the third reactor (5) is arranged to operate at a lower temperature than the first reactor (1'), and the second reactor (11') is arranged to operate at a higher temperature than the first reactor (1').

4. The system according to anyone of the previous claims, the system further comprising:
means (6) for cooling the second portion of the particulate sorbent material prior to entering the third reactor (5), and/or
means (10) for heating the second portion of the particulate sorbent material prior to returning to the first reactor (1'), and/or
means (15) for cooling the first portion of particulate sorbent material to be returned from the second reactor (11') to the first reactor (1'), and/or
means (95) for heating the first portion of particulate sorbent material to be received by the second reactor (11') from the first reactor (1').

5. The system according to claim 4, wherein the means (15) for cooling the first portion of particulate sorbent material to be returned from the second reactor (11') to the first reactor (1') and the means (95) for heating the first portion of particulate sorbent material to be received by the second reactor (11') from the first reactor (1') comprises means (95) for exchanging heat from the first portion of particulate sorbent material to be returned from the second reactor (11') to the first reactor (1') to the first portion of particulate sorbent material to be received by the second reactor (11') from the first reactor (1').

6. The system according to anyone of the previous claims, wherein the process gas is flue gas.

7. The system according to anyone of the previous claims, wherein the means (9) for returning the second portion of particulate sorbent material to the first reactor (1') is arranged for dehydrating the hydrated calcium oxide, and/or wherein the first reactor (1') is arranged for dehydrating the hydrated calcium oxide.

8. A method for capturing CO₂ from a process gas in a system comprising a first reactor (1'), a second reactor (11') and a third reactor (5), the method comprising the steps of:
- transporting process gas comprising CO₂ to the first reactor (1'),
- contacting the process gas comprising CO₂ with a sorbent material comprising calcium oxide and carbonating a portion of the content of calcium oxide, such that sorbent material comprising calcium carbonate and calcium oxide is formed, in the first reactor (1'),
- transporting a first portion of the sorbent material comprising calcium carbonate from the first reactor (1') to the second reactor (11'),
- releasing CO₂ from the first portion of the sorbent material comprising calcium carbonate and calcium oxide by decarbonation of at least a portion of the content of the calcium carbonate in the second reactor (11'),
- returning, subsequent to the decarbonation, at least a portion of the first portion of the sorbent material from the second reactor (11') to the first reactor (11'),
- transporting a second portion of the sorbent material comprising calcium carbonate and calcium oxide from the first reactor (1') to the third reactor (5),
- adding water to the third reactor (5) and hydrating at least a part of the second portion of the sorbent material comprising calcium carbonate and calcium oxide, to form calcium hydroxide from the calcium oxide, and
- returning, subsequent to the hydrating, the second portion of the sorbent material from the third reactor (5) to the first reactor (1').
**characterized by**
removing fine particulate sorbent material from the CO₂ depleted flue gas discharged from the first reactor (1') in at least one first separator (16; 22-24, 32),
removing fine particulate sorbent material from the CO₂ rich gas discharged from the second reactor (11') in a second separator (93),
receiving fine particulate sorbent material from one (16, 32) of the at least one first separator (16; 22-24, 32) and the second separator (93) and mixing them with a liquid, producing wet agglomerates of the fine sorbent particles, in an agglomerator (19), and
forwarding the wet agglomerates from the agglomerator (19) to the first reactor (1') and/or to the third reactor (5).

9. The method according to claim 8, further comprising the step of:
- dehydrating at least a part of the calcium hydroxide from the third reactor (5).

10. The method according to claim 8 or 9, further comprising the steps of:
- cooling the second portion of the sorbent material comprising calcium carbonate and calcium oxide prior to entering the third reactor (5),
- heating the second portion of the sorbent material comprising calcium carbonate and calcium hydroxide, prior to entering the first reactor (1'), and, optionally,
- exchanging heat from the first portion of the sorbent material comprising calcium carbonate and calcium oxide transported towards the first reactor (1') to the first portion of the sorbent material comprising calcium carbonate and calcium oxide transported to the second reactor (11').

11. The method according to anyone of claims 8 to 10, wherein the step of agglomerating takes place at a temperature of 100°C or less.

12. The method according to anyone of claims 8 to 11, wherein the process gas is flue gas.

13. The method according to anyone of claims 8 to 12, wherein
the step of contacting the process gas comprising CO₂ with a sorbent material in the first reactor (1') takes place at a temperature of 700°C or less,
the step of releasing CO₂ from the first portion of the sorbent material in the second reactor (11') takes place at a temperature of at least 890°C,
the step of hydrating at least a part of the second portion of the sorbent material in the third reactor (15) takes place at a temperature of 510°C or less.

14. A use of the system according to anyone of claims 1 to 7, for regeneration of the particulate sorbent material.

## Patentansprüche

1. System zur Einfangen von CO₂ aus einem Prozessgas, wobei das System umfasst:
einen ersten Reaktor (1'), der so angeordnet ist, dass er einen Strom von Prozessgas und ein teilchenförmiges Sorptionsmaterial aufnimmt, das Kalziumoxid umfasst, das in der Lage ist, das in dem Prozessgas vorhandene CO₂ einzufangen, so dass Kalziumkarbonat gebildet wird, wobei der erste Reaktor (1') Mittel (3) zum Ablassen von an CO₂ abgereichertem Prozessgas, Mittel (90) zum Ablassen eines ersten Anteils des teilchenförmigen Sorptionsmaterials, das eingefangenes CO₂ aufweist, und Mittel (4) zum Ablassen eines zweiten Anteils des teilchenförmigen Sorptionsmaterials, das eingefangenes CO₂ aufweist, umfasst,
einen zweiten Reaktor (11'), der so angeordnet ist, dass er den ersten Anteil des teilchenförmigen Sorptionsmaterials von dem ersten Reaktor (1') aufnimmt, wobei der zweite Reaktor (11') eine Heizeinrichtung umfasst, die so angeordnet ist, dass sie die Freisetzung von CO₂ aus dem teilchenförmigen Sorptionsmaterial durch Dekarbonisierung des Kalziumkarbonats zur Bildung von Kalziumoxid bewirkt, wobei der zweite Reaktor (11') ferner Mittel (14) zum Zurückführen des ersten Anteils des teilchenförmigen Sorptionsmaterials zum ersten Reaktor (1') und Mittel (12) zum Ablassen eines CO₂-reichen Gasstroms umfasst, und
einen dritten Reaktor (5), der so angeordnet ist, dass er den zweiten Anteil des teilchenförmigen Sorptionsmaterials aus dem ersten Reaktor (1') aufnimmt, wobei der dritte Reaktor (5) Mittel (7) zum Zuführen von Wasser zu dem zweiten Anteil des teilchenförmigen Sorptionsmaterials umfasst, um mindestens einen Teil eines verbleibenden Anteils von Kalziumoxid des zweiten Anteils von teilchenförmigem Sorptionsmaterial zur Bildung von Kalziumhydroxid zu hydratisieren, wobei der dritte Reaktor (5) ferner Mittel (9) zum Zurückführen des zweiten Anteils des teilchenförmigen Sorptionsmaterials zu dem ersten Reaktor (1') umfasst,
**gekennzeichnet durch**
mindestens einen ersten Abscheider (16; 22-24, 32), der so angeordnet ist, dass er feines teilchenförmiges Sorptionsmaterial aus dem an CO₂ abgereicherten Rauchgas entfernt, das aus dem ersten Reaktor (1') abgelassen wird,
einen zweiten Abscheider (93), der so angeordnet ist, dass er feines teilchenförmiges Sorptionsmaterial aus dem CO₂-reichen Gas, das aus dem zweiten Reaktor (11') abgelassen wird, entfernt, und
einen Agglomerator (19), der so konfiguriert ist, dass er feines teilchenförmiges Sorptionsmaterial von einem (16, 32) von dem mindestens einen ersten Abscheider (16; 22-24, 32) und dem zweiten Abscheider (93) aufnimmt und mit einer Flüssigkeit mischt, wobei nasse Agglomerate der feinen Sorptionsteilchen erzeugt werden, und dass er die nassen Agglomerate zum ersten Reaktor (1') und/oder zum dritten Reaktor (5) weiterleitet.

2. System nach Anspruch 1, wobei der erste Reaktor (1') ein Karbonator-Reaktor, der zweite Reaktor (11') ein Kalzinier-Reaktor und der dritte Reaktor (5) ein Hydrier-Reaktor ist.

3. System nach Anspruch 1 oder 2, wobei der dritte Reaktor (5) so angeordnet ist, dass er bei einer niedrigeren Temperatur als der erste Reaktor (1') arbeitet, und der zweite Reaktor (11') so angeordnet ist, dass er bei einer höheren Temperatur als der erste Reaktor (1') arbeitet.

4. System nach einem der vorstehenden Ansprüche, wobei das System ferner umfasst:
Mittel (6) zum Kühlen des zweiten Anteils des teilchenförmigen Sorptionsmaterials vor dem Eintritt in den dritten Reaktor (5) und/oder
Mittel (10) zum Erwärmen des zweiten Anteils des teilchenförmigen Sorptionsmaterials vor dem Zurückführen zum ersten Reaktor (1') und/oder
Mittel (15) zum Kühlen des ersten Anteils des teilchenförmigen Sorptionsmaterials, das vom zweiten Reaktor (11') zum ersten Reaktor (1') zurückgeführt werden soll, und/oder
Mittel (95) zum Erwärmen des ersten Anteils des teilchenförmigen Sorptionsmaterials, das vom zweiten Reaktor (11') aus dem ersten Reaktor (1') aufgenommen werden soll.

5. System nach Anspruch 4, wobei die Mittel (15) zum Kühlen des ersten Anteils des teilchenförmigen Sorptionsmaterials, das von dem zweiten Reaktor (11') zum ersten Reaktor (1') zurückgeführt werden soll, und die Mittel (95) zum Erwärmen des ersten Anteils des teilchenförmigen Sorptionsmaterials, das von dem zweiten Reaktor (11') aus dem ersten Reaktor (1') aufgenommen werden soll, Mittel (95) zum Austauschen von Wärme vom ersten Anteil des teilchenförmigen Sorptionsmaterials, das aus dem zweiten Reaktor (11') zum ersten Reaktor (1') zurückgeführt werden soll, mit dem ersten Anteil des teilchenförmigen Sorptionsmaterials, das von dem zweiten Reaktor (11') aus dem ersten Reaktor (1') aufgenommen werden soll, umfasst.

6. System nach einem der vorstehenden Ansprüche, wobei das Prozessgas Rauchgas ist.

7. System nach einem der vorstehenden Ansprüche, wobei die Mittel (9) zum Zurückführen des zweiten Anteils des teilchenförmigen Sorptionsmaterials zum ersten Reaktor (1') zum Dehydratisieren des hydratisierten Kalziumoxids angeordnet sind und/oder wobei der erste Reaktor (1') zum Dehydratisieren des hydratisierten Kalziumoxids angeordnet ist.

8. Verfahren zum Einfangen von CO₂ aus einem Prozessgas in einem System, das einen ersten Reaktor (1'), einen zweiten Reaktor (11') und einen dritten Reaktor (5) umfasst, wobei das Verfahren die folgenden Schritte umfasst:
- Transportieren von CO₂-haltigem Prozessgas zum ersten Reaktor (1'),
- Inkontaktbringen des Prozessgases, das CO₂ umfasst, mit einem Sorptionsmaterial, das Kalziumoxid umfasst, und Karbonisieren eines Anteils des Kalziumoxid-Gehalts, so dass im ersten Reaktor (1') ein Sorptionsmaterial gebildet wird, das Kalziumkarbonat und Kalziumoxid umfasst,
- Transportieren eines ersten Anteils des Sorptionsmaterials, das Kalziumkarbonat umfasst, vom ersten Reaktor (1') zum zweiten Reaktor (11'),
- Freisetzen von CO₂ vom ersten Anteil des Sorptionsmaterials, das Kalziumkarbonat und Kalziumoxid umfasst, durch Dekarbonisierung mindestens eines Anteils des Gehalts an Kalziumkarbonat im zweiten Reaktor (11'),
- nach der Dekarbonisierung, Zurückführen mindestens eines Anteils des ersten Anteils des Sorptionsmaterials von dem zweiten Reaktor (11') zum ersten Reaktor (11'),
- Transportieren eines zweiten Anteils des Sorptionsmaterials, das Kalziumkarbonat und Kalziumoxid umfasst, vom ersten Reaktor (1') zum dritten Reaktor (5),
- Zugeben von Wasser zum dritten Reaktor (5) und Hydratisieren mindestens eines Teils des zweiten Anteils des Sorptionsmaterials, das Kalziumkarbonat und Kalziumoxid umfasst, um aus dem Kalziumoxid Kalziumhydroxid zu bilden, und
- Zurückführen des zweiten Anteils des Sorptionsmaterials nach dem Hydratisieren vom dritten Reaktor (5) zum ersten Reaktor (1').
**gekennzeichnet durch**
Entfernen von feinem teilchenförmigem Sorptionsmaterial aus dem an CO₂ abgereicherten Rauchgas, das aus dem ersten Reaktor (1') abgelassen wird, in mindestens einem ersten Abscheider (16; 22- 24, 32),
Entfernen von feinem teilchenförmigem Sorptionsmaterial aus dem CO₂-reichen Gas, das aus dem zweiten Reaktor (11') abgelassen wird, in einem zweiten Abscheider (93),
Aufnehmen von feinem teilchenförmigem Sorptionsmaterial von einem (16, 32) von dem mindestens einen ersten Abscheider (16; 22-24, 32) und dem zweiten Abscheider (93) und Vermischen davon mit einer Flüssigkeit, wobei nasse Agglomerate der feinen Sorptionsteilchen in einem Agglomerator (19) erzeugt werden, und
Weiterleiten der nassen Agglomerate von dem Agglomerator (19) zum ersten Reaktor (1') und/oder zum dritten Reaktor (5).

9. Verfahren nach Anspruch 8, ferner folgenden Schritt umfassend:
- Dehydratisieren zumindest eines Teils des Kalziumhydroxids von dem dritten Reaktor (5).

10. Verfahren nach Anspruch 8 oder 9, ferner folgende Schritte umfassend:
- Kühlen des zweiten Anteils des Sorptionsmaterials, das Kalziumkarbonat und Kalziumoxid umfasst, vor dem Eintritt in den dritten Reaktor (5),
- Erwärmen des zweiten Anteils des Sorptionsmaterials, das Kalziumkarbonat und Kalziumhydroxid umfasst, vor dem Eintritt in den ersten Reaktor (1') und, optional,
- Austauschen von Wärme von dem ersten Anteil des Sorptionsmaterials, das Kalziumkarbonat und Kalziumoxid umfasst, das zum ersten Reaktor (1') transportiert wird, mit dem ersten Anteil des Sorptionsmaterials, das Kalziumkarbonat und Kalziumoxid umfasst, das zum zweiten Reaktor (11') transportiert wird.

11. Verfahren nach einem der Ansprüche 8 bis 10, wobei der Schritt des Agglomerierens bei einer Temperatur von 100 °C oder weniger erfolgt.

12. Verfahren nach einem der Ansprüche 8 bis 11, wobei das Prozessgas Rauchgas ist.

13. Verfahren nach einem der Ansprüche 8 bis 12, wobei
der Schritt des Inkontaktbringens des CO₂ umfassenden Prozessgases mit einem Sorptionsmaterial im ersten Reaktor (1') bei einer Temperatur von 700 °C oder weniger erfolgt,
der Schritt des Freisetzens von CO₂ aus dem ersten Anteil des Sorptionsmaterials im zweiten Reaktor (11') bei einer Temperatur von mindestens 890 °C erfolgt,
der Schritt des Hydratisierens mindestens eines Teils des zweiten Anteils des Sorptionsmaterials im dritten Reaktor (15) bei einer Temperatur von 510 °C oder weniger erfolgt.

14. Verwendung des Systems nach einem der Ansprüche 1 bis 7 zur Regenerierung des teilchenförmigen Sorptionsmaterials.

## Revendications

1. Système de capture de CO₂ à partir d'un gaz de procédé, le système comprenant
un premier réacteur (1') agencé pour recevoir un flux de gaz de procédé et un matériau sorbant particulaire comprenant de l'oxyde de calcium capable de capturer le CO₂ présent dans le gaz de procédé de telle sorte que du carbonate de calcium est formé, le premier réacteur (1') comprenant un moyen (3) pour décharger le gaz de procédé appauvri en CO₂, un moyen (90) pour décharger une première partie de matériau sorbant particulaire ayant capturé du CO₂, et un moyen (4) pour décharger une seconde partie du matériau sorbant particulaire ayant capturé du CO₂,
un deuxième réacteur (11') agencé pour recevoir la première partie du matériau sorbant particulaire à partir du premier réacteur (1'), le deuxième réacteur (11') comprenant un moyen de chauffage agencé pour provoquer la libération de CO₂ du matériau sorbant particulaire par décarbonatation du carbonate de calcium pour former de l'oxyde de calcium, le deuxième réacteur (11') comprenant en outre un moyen (14) pour renvoyer la première partie du matériau sorbant particulaire vers le premier réacteur (1') et un moyen (12) pour décharger un flux de gaz riche en CO₂, et
un troisième réacteur (5) agencé pour recevoir la seconde partie du matériau sorbant particulaire à partir du premier réacteur (1'), le troisième réacteur (5) comprenant un moyen (7) pour fournir de l'eau à la seconde partie du matériau sorbant particulaire pour hydrater au moins une partie d'une partie restante d'oxyde de calcium de la seconde partie du matériau sorbant particulaire pour former de l'hydroxyde de calcium, le troisième réacteur (5) comprenant en outre un moyen (9) pour renvoyer la seconde partie du matériau sorbant particulaire vers le premier réacteur (1'),
**caractérisé par**
au moins un premier séparateur (16 ; 22-24, 32) agencé pour éliminer le matériau sorbant particulaire fin du gaz de combustion appauvri en CO₂ déchargé du premier réacteur (1'),
un second séparateur (93) agencé pour retirer le matériau sorbant particulaire fin du gaz riche en CO₂ déchargé du deuxième réacteur (11'), et
un agglomérateur (19) configuré pour recevoir le matériau sorbant particulaire fin provenant de l'un (16, 32) de l'au moins un premier séparateur (16 ; 22-24, 32) et du second séparateur (93) et pour les mélanger avec un liquide, pour produire des agglomérats humides des particules sorbant fin, et pour transmettre les agglomérats humides au premier réacteur (1') et/ou au troisième réacteur (5).

2. Système selon la revendication 1, dans lequel le premier réacteur (1') est un réacteur de carbonatation, le deuxième réacteur (11') est un réacteur de calcination, et le troisième réacteur (5) est un réacteur d'hydratation.

3. Système selon la revendication 1 ou 2, dans lequel le troisième réacteur (5) est agencé pour fonctionner à une température inférieure à celle du premier réacteur (1'), et le deuxième réacteur (11') est agencé pour fonctionner à une température supérieure à celle du premier réacteur (1').

4. Système selon l'une quelconque des revendications précédentes, le système comprenant en outre :
un moyen (6) pour refroidir la seconde partie du matériau sorbant particulaire avant d'entrer dans le troisième réacteur (5), et/ou
un moyen (10) pour chauffer la seconde partie du matériau sorbant particulaire avant de la renvoyer vers le premier réacteur (1'), et/ou
un moyen (15) pour refroidir la première partie du matériau sorbant particulaire devant être renvoyée à partir du deuxième réacteur (11') vers le premier réacteur (1'), et/ou
un moyen (95) pour chauffer la première partie du matériau sorbant particulaire devant être reçue par le deuxième réacteur (11') à partir du premier réacteur (1').

5. Système selon la revendication 4, dans lequel le moyen (15) pour refroidir la première partie du matériau sorbant particulaire devant être renvoyée à partir du deuxième réacteur (11') vers le premier réacteur (1') et le moyen (95) pour chauffer la première partie du matériau sorbant particulaire devant être reçue par le deuxième réacteur (11') à partir du premier réacteur (T) comprend un moyen (95) pour échanger la chaleur à partir de la première partie du matériau sorbant particulaire devant être renvoyée à partir du deuxième réacteur (11') vers le premier réacteur (1') vers la première partie du matériau sorbant particulaire devant être reçue par le deuxième réacteur (11') à partir du premier réacteur (1').

6. Système selon l'une quelconque des revendications précédentes, dans lequel le gaz de procédé est un gaz de combustion.

7. Système selon l'une quelconque des revendications précédentes, dans lequel le moyen (9) pour renvoyer la seconde partie de matériau sorbant particulaire vers le premier réacteur (T) est agencé pour déshydrater l'oxyde de calcium hydraté, et/ou dans lequel le premier réacteur (T) est agencé pour déshydrater l'oxyde de calcium hydraté.

8. Procédé de capture de CO₂ à partir d'un gaz de procédé dans un système comprenant un premier réacteur (1'), un deuxième réacteur (11') et un troisième réacteur (5), le procédé comprenant les étapes consistant à :
- transporter le gaz de procédé comprenant du CO₂ vers le premier réacteur (1'),
- mettre en contact le gaz de procédé comprenant du CO₂ avec un matériau sorbant comprenant de l'oxyde de calcium et carbonater une partie de la teneur en oxyde de calcium, de telle sorte que le matériau sorbant comprenant du carbonate de calcium et de l'oxyde de calcium est formé, dans le premier réacteur (1'),
- transporter une première partie du matériau sorbant comprenant du carbonate de calcium à partir du premier réacteur (1') vers le deuxième réacteur (11'),
- libérer le CO₂ à partir de la première partie du matériau sorbant comprenant du carbonate de calcium et de l'oxyde de calcium par décarbonatation d'au moins une partie de la teneur en carbonate de calcium dans le deuxième réacteur (11'),
- renvoyer, suite à la décarbonatation, au moins une partie de la première partie du matériau sorbant à partir du deuxième réacteur (11') vers le premier réacteur (11'),
- transporter une seconde partie du matériau sorbant comprenant du carbonate de calcium et de l'oxyde de calcium à partir du premier réacteur (1') vers le troisième réacteur (5),
- ajouter de l'eau au troisième réacteur (5) et hydrater au moins une partie de la seconde partie du matériau sorbant comprenant du carbonate de calcium et de l'oxyde de calcium, pour former de l'hydroxyde de calcium à partir de l'oxyde de calcium, et
- renvoyer, suite à l'hydratation, la seconde partie du matériau sorbant à partir du troisième réacteur (5) vers le premier réacteur (1').
**caractérisé par**
l'élimination du matériau sorbant particulaire fin du gaz de combustion appauvri en CO₂ déchargé à partir du premier réacteur (1') dans au moins un premier séparateur (16 ; 22-24, 32),
l'élimination du matériau sorbant particulaire fin à partir du gaz riche en CO₂ déchargé à partir du deuxième réacteur (11') dans un second séparateur (93),
la réception du matériau sorbant particulaire fin de l'un (16, 32) de l'au moins un premier séparateur (16 ; 22-24, 32) et du second séparateur (93) et le mélange de ceux-ci avec un liquide, pour produire des agglomérats humides des particules de sorbant fin, dans un agglomérateur (19), et
la transmission des agglomérats humides à partir de l'agglomérateur (19) vers le premier réacteur (T) et/ou vers le troisième réacteur (5).

9. Procédé selon la revendication 8, comprenant en outre l'étape consistant à :
- déshydrater au moins une partie de l'hydroxyde de calcium à partir du troisième réacteur (5).

10. Procédé selon la revendication 8 ou 9, comprenant en outre les étapes consistant à :
- refroidir une seconde partie du matériau sorbant comprenant du carbonate de calcium et de l'oxyde de calcium avant d'entrer dans le troisième réacteur (5),
- chauffer la seconde partie du matériau sorbant comprenant du carbonate de calcium et de l'oxyde de calcium avant d'entrer dans le premier réacteur (1'), et, éventuellement,
- échanger la chaleur à partir de la première partie du matériau sorbant comprenant du carbonate de calcium et de l'oxyde de calcium transportée vers le premier réacteur (1') vers la première partie du matériau sorbant comprenant du carbonate de calcium et de l'oxyde de calcium transportée vers le deuxième réacteur (11').

11. Procédé selon l'une quelconque des revendications 8 à 10, dans lequel l'étape d'agglomération a lieu à une température de 100 °C ou moins.

12. Système selon l'une quelconque des revendications 8 à 11, dans lequel le gaz de procédé est un gaz de combustion.

13. Procédé selon l'une quelconque des revendications 8 à 12, dans lequel
l'étape de mise en contact du gaz de procédé comprenant du CO₂ avec un matériau sorbant dans le premier réacteur (1') a lieu à une température de 700 °C ou moins,
l'étape de libération de CO₂ à partir de la première partie du matériau sorbant dans le deuxième réacteur (11') a lieu à une température d'au moins 890 °C,
l'étape d'hydratation d'au moins une partie de la seconde partie du matériau sorbant dans le troisième réacteur (15) a lieu à une température de 510 °C ou moins.

14. Utilisation du système selon l'une quelconque des revendications 1 à 7, pour la régénération du matériau sorbant particulaire.
